# EUROPÄISCHE PATENTSCHRIFT

(11) **EP 1 717 090 B1**
(45) Veröffentlichungstag und Bekanntmachung des Hinweises auf die Patenterteilung: **13.06.2007**
(21) Anmeldenummer: 06007932.4
(22) Anmeldetag: 15.04.2006
(51) Int. Cl.: B60K 17/356, B60K 6/04, B60K 7/00

(54) **Allradangetriebenes Kraftfahrzeug**
All-wheel-drive motor vehicle
Véhicule à toutes roues motrices

(30) Priorität: 27.04.2005 DE 102005019489
(43) Veröffentlichungstag der Anmeldung: 02.11.2006
(73) Patentinhaber: Krauss-Maffei Wegmann GmbH & Co. KG, 80997 München (DE)
(72) Erfinder: Grabmaier, Norbert, Dipl.-Ing., 84579 Unterneukirchen (DE); Helf, Kurt, Dipl.-Ing., 83083 Riedering (DE)
(74) Vertreter: Feder, Wolf-Dietrich

(56) Entgegenhaltungen:
- EP-A- 1 008 481
- DE-A1- 10 121 372
- FR-A- 2 658 259

## Beschreibung

Die Erfindung betrifft ein allradangetriebenes Kraftfahrzeug mit den Merkmalen aus dem Oberbegriff des Patentanspruchs 1.

Derartige Kraftfahrzeuge sind an sich bekannt. Ein als Hybridfahrzeug mit dieselelektrischer Antriebsvorrichtung ausgebildetes Kraftfahrzeug dieser Bauart ist beispielsweise in DE 101 21 372 A1 beschrieben.

EP 1 008 481 offenbart ein Kraftfahrzeug nach dem Oberbegriff des Anspruchs 1.

Es sind weiterhin Kraftfahrzeuge mit einem mechanischen Triebstrang allgemein bekannt und auch Kraftfahrzeuge, bei denen beispielsweise die Vorderachse mechanisch angetrieben wird, während für die Hinterachse ein elektrischer Zusatzantrieb vorgesehen ist.

Kraftfahrzeuge mit einem mechanischen Triebstrang haben den Nachteil, dass kein Drehen um die Fahrzeug-Hochachse möglich ist und keine flexible Triebstranggestaltung möglich ist, da die Anordnung durch erforderliche Komponenten festgelegt ist.

Kraftfahrzeuge mit elektrischer oder hydraulischer Antriebseinrichtung, also beispielsweise Kraftfahrzeuge, bei denen die Antriebsmotoren jeweils in den Rädern angeordnet sind, haben den Nachteil, dass die Motoren in Leistung und Drehmoment für maximal benötigte Werte ausgelegt werden müssen, da jeder Motor nur auf ein Rad wirkt.

Der Erfindung liegt die Aufgabe zugrunde, ein Kraftfahrzeug der im Oberbegriff des Patentanspruchs 1 angegebenen Bauart so auszubilden, dass ein Drehen im Stand möglich wird und/oder die Antriebsmotoren für weniger Leistung ausgelegt werden können.

Die Lösung der Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Bei der erfindungsgemäßen Ausbildung des Fahrzeuges werden die Vorteile eines mechanischen Triebstrangs mit den Vorteilen eines elektrischen oder hydraulischen Einzelradantriebs verbunden. Grundsätzlich erfolgt der Aufbau des Antriebs aus Einzelradantrieben, und diese können durch Quersperren achsweise zusammengeschaltet und durch Gelenkwellen und Längssperren zu einem Gesamttriebstrang nach Vorbild eines gesperrten mechanischen Triebstrangs geschaltet werden. Dieses System ermöglicht bei kompakter Bauweise einen elektrischen oder hydraulischen Antriebsstrang, mit dem ein Fahrzeug auch Extremhindernisse (Hang/Stufe) überwinden kann. Die Motoren können für weniger Leistung ausgelegt werden, was sich auf die Baugröße und die Kosten auswirkt und auch zu kompakteren Hilfssystemen (Kühlung, Generator, Leistungselektronik) führt.

Weiterhin wird durch das System eine zentrale Parkbremse bzw. Parksperre ermöglicht, was zu Bauraum- und Gewichtsvorteilen führt. Es werden dadurch ungefederte Massen reduziert und die Wärmeabfuhr der Betriebsbremse durch bessere Anströmung der Bremsscheibe bzw. des Betriebsbremssattels verbessert.

Die Eigenschaften eines Einzelradantriebs wie das Drehen um die Fahrzeug-Hochachse ohne Vorwärtsbewegung des Fahrzeugs durch unterschiedliche Raddrehzahlen und die aktive Fahrzeugstabilisierung durch unterschiedliche Raddrehmomente sind gegeben.

Damit ist das erfindungsgemäße Kraftfahrzeug als Geländefahrzeug und insbesondere für militärische Anwendungen besonders gut geeignet.

Das erfindungsgemäße Kraftfahrzeug benötigt mindestens zwei Achsen und kann auf eine beliebige Anzahl von Achsen ausgelegt sein. Als elektrische Energiequelle kann für ein Hybridfahrzeug ein Dieselaggregat verwendet werden, das einen Generator oder eine Hydraulikpumpe antreibt, es sind aber auch andere Energiequellen möglich, wie beispielsweise Akkumulatoren, Batterien oder Brennstoffzellen.

Als schaltbare Quersperreinrichtungen und schaltbare Längssperreinrichtungen können grundsätzlich sowohl formschlüssig oder kraftschlüssig arbeitende Kupplungen verwendet werden, also beispielsweise Klauenkupplungen, Lamellenkupplungen, Fluidkupplungen etc., die auch in gemischter Anordnung eingesetzt werden können.

Im folgenden werden Ausführungsbeispiele für ein allradangetriebenes Kraftfahrzeug nach der Erfindung anhand der Zeichnungen näher erläutert.

In den Zeichnungen zeigen:
- Fig. 1: den Triebstrang eines allradangetriebenes Kraftfahrzeugs in einer stark schematisierten Ansicht von oben in einer ersten Ausführungsform;
- Fig. 2: in einer Darstellung analog Fig. 1 einen Triebstrang in einer zweiten Ausführungsform;
- Fig. 3: in einer Darstellung analog Fig. 1 den Triebstrang in einer dritten Ausführungsform;
- Fig. 4: in einer Darstellung analog Fig. 1 den Triebstrang in einer vierten Ausführungsform;
- Fig. 5: in einer Darstellung analog Fig. 1 den Triebstrang in einer fünften Ausführungsform.

In allen Darstellungen ist die linke Fahrzeugseite mit L und die rechte Fahrzeugseite mit R bezeichnet. Es sind jeweils dreiachsige Triebstränge dargestellt mit einer ersten Achse A1, einer zweiten Achse A2 und einer dritten Achse A3. Zur ersten Achse A1 gehören die Räder R1 und R2, zur zweiten Achse A2 gehören die Räder R3 und R4 und zur dritten Achse A3 gehören die Räder R5 und R6.

Alle Fahrzeuge besitzen eine elektrische oder hydraulische Energiequelle EQ, die in unterschiedlicher an sich bekannter Weise verwirklicht sein kann und nicht näher beschrieben wird. Die Zuleitung der Energie zu den Motoren M des Antriebs erfolgt über Zuleitungen Z.

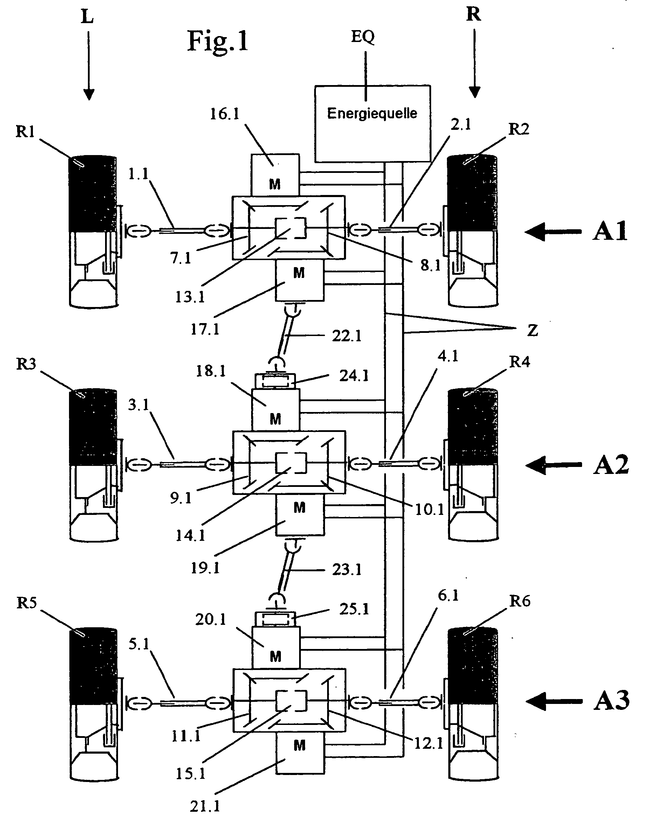

Bei dem in Fig. 1 dargestellten ersten Ausführungsbeispiel des Antriebsstrangs sind die Räder R1 und R2 der Achse A1 jeweils über in Fahrzeugquerrichtung verlaufende Gelenkwellen 1.1 und 2.1 mit einem ihnen zugeordneten Getriebe 7.1 bzw. 8.1 verbunden. Die Getriebe 7.1 und 8.1 sind in einem im wesentlichen auf der Fahrzeuglängsmitte liegenden gemeinsamen Gehäuse angeordnet, an dessen Querseiten Motoren 16.1 und 17.1 angesetzt sind. Der Motor 16.1 treibt das Rad R1 an, während der Motor 17.1 das Rad R2 antreibt. Die beiden Räder R1 und R2 sind über eine schaltbare Quersperreinrichtung 13.1 miteinander koppelbar.

In analoger Weise sind die Räder R3 und R4 der Achse A2 über Gelenkwellen 3.1 bzw. 4.1 und Getriebe 9.1 bzw. 10.1 mit den Motoren 18.1 bzw. 19.1 verbunden und über die schaltbare Quersperreinrichtung 14.1 koppelbar.

Die Räder R5 und R6 der Achse A3 sind über die Gelenkwellen 5.1 bzw. 6.1 und die Getriebe 11.1 bzw. 12.1 mit den Motoren 20.1 bzw. 21.1 verbunden und über die schaltbare Quersperreinrichtung 15.1 koppelbar.

Die Motoren 17.1, 18.1, 19.1 und 20.1 besitzen jeweils durchgehende Abtriebswellen, deren eines Ende jeweils mit dem Getriebe dieses Motors verbunden ist. Das andere Ende der Abtriebswelle des Motors 17.1 ist über eine in Längsrichtung des Fahrzeugs verlaufende Gelenkwelle 22.1 und eine schaltbare Längssperreinrichtung 24.1 mit einem Ende der Abtriebswelle des Motors 18.1 verbunden, deren anderes Ende das Getriebe 9.1 antreibt. Beim Motor 19.1 ist das andere Ende der Abtriebswelle über eine in Längsrichtung verlaufende Gelenkwelle 23.1 und eine schaltbare Längs- sperreinrichtung 25.1 mit einem Ende der Abtriebswelle des Motors 20.1 verbunden, deren anderes Ende das Getriebe 11.1 antreibt.

Die Möglichkeiten der Koppelung zwischen den Rädern und Achsen des Triebstrangs sind unmittelbar aus Fig. 1 ablesbar. Wenn sämtliche Quersperreinrichtungen 13.1, 14.1 und 15.1 und sämtliche Längssperreinrichtungen 24.1 und 25.1 gesperrt sind, sind alle Räder und Achsen miteinander gekoppelt.

Sind alle Quersperreinrichtungen 13.1, 14.1 und 15.1 und alle Längssperreinrichtungen 24.1 und 25.1 entsperrt, so liegt ein Triebstrang mit Einzelradantrieb vor. Je nach Bedarf sind verschiedene Zwischenstufen zwischen diesen beiden Zuständen schaltbar.

Weiterhin ist im gesperrten Zustand aller Quersperreinrichtungen und Längssperreinrichtungen der Einsatz einer zentralen, auf alle Räder wirkenden Parkbremse oder Parksperre möglich.

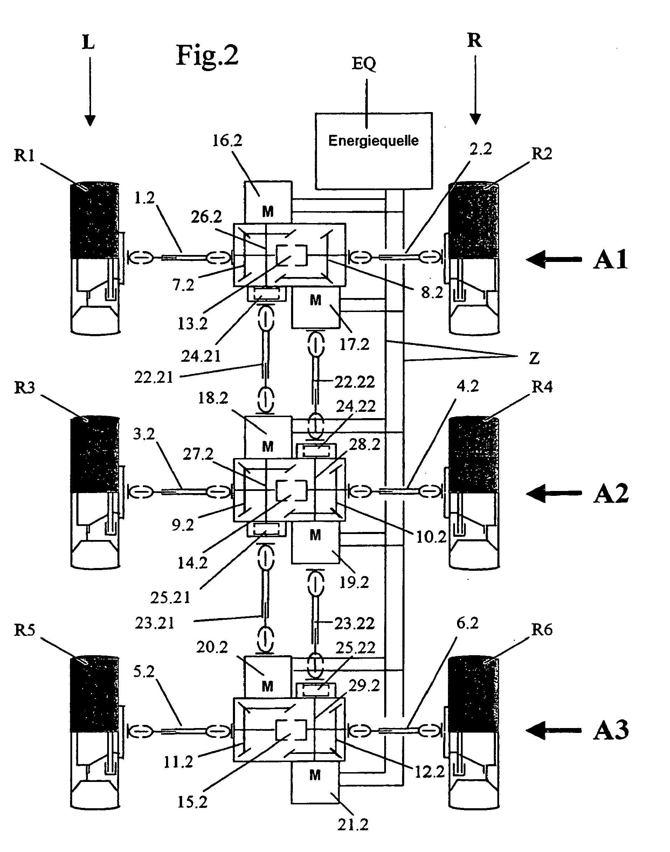

Bei der Ausführungsform nach Fig. 2 sind die Räder R1 und R2 der Achse A1 über die in Fahrzeugquerrichtung verlaufenden Gelenkwellen 1.2 bzw. 2.2 jeweils mit den Getrieben 7.2 bzw. 8.2 verbunden, und die Räder R1 und R2 sind über die schaltbare Quersperreinrichtung 13.2 koppelbar. Ebenso sind die Räder R3 und R4 der Achse A2 über die Gelenkwellen 3.2 bzw. 4.2 mit den Getrieben 9.2 bzw. 10. 2 verbunden, und die Räder R3 und R4 sind über die schaltbare Quersperreinrichtung 14.2 koppelbar. Die Räder R5 und R6 der Achse A3 sind über die Gelenkwellen 5.2 bzw. 6.2 mit den Getrieben 11.2 und 12.2 verbunden und über die schaltbare Quersperreinrichtung 15.2 koppelbar.

Der Unterschied dieser Ausführungsform gegenüber der Ausführungsform nach Fig. 1 besteht darin, dass die Antriebe der Räder R1, R3 und R5 der linken Fahrzeugseite L und die Antriebe der Räder R2, R4 und R6 der rechten Fahrzeugseite R unabhängig voneinander miteinander koppelbar sind.

Hierzu ist auf der linken Fahrzeugseite L der Motor 16.2 über eine durch das Getriebe 7.2 geführte Zusatzwelle 26.2 und eine schaltbare Längssperreinrichtung 24.21 sowie eine in Fahrzeuglängsrichtung verlaufende Gelenkwelle 22.21 mit dem Motor 18.2 koppelbar, der eine durchgehende Abtriebswelle aufweist und der seinerseits über eine durch das Getriebe 9.2 geführte Zusatzwelle 27.2 und eine schaltbare Längssperreinrichtung 25.21 sowie eine in Fahrzeuglängsrichtung verlaufende Gelenkwelle 23.21 mit dem Motor 20.2 koppelbar ist.

In der gleichen Weise ist der Motor 17.2 der rechten Fahrzeugseite R über eine in Fahrzeuglängsrichtung verlaufende Gelenkwelle 22.22, eine schaltbare Längssperreinrichtung 24.22 und eine durch das Getriebe 10.2 geführte zusätzliche Welle 28.2 mit dem Motor 19.2 koppelbar, der seinerseits eine durchgehende Abtriebswelle besitzt, deren anderes Ende über eine in Fahrzeuglängsrichtung verlaufende Gelenkwelle 23.22, eine schaltbare Längssperreinrichtung 25.22 und eine durch das Getriebe 12.2 geführte Zusatzwelle 29.2 mit dem Motor 21.2 koppelbar ist.

Diese Ausführungsform des Triebstrangs ermöglicht es, das Drehmoment jeweils der drei Motoren einer Fahrzeugseite auf die Antriebsräder der gleichen Seite zu bringen, was beim Drehen um die Fahrzeug-Hochachse Vorteile bringen kann.

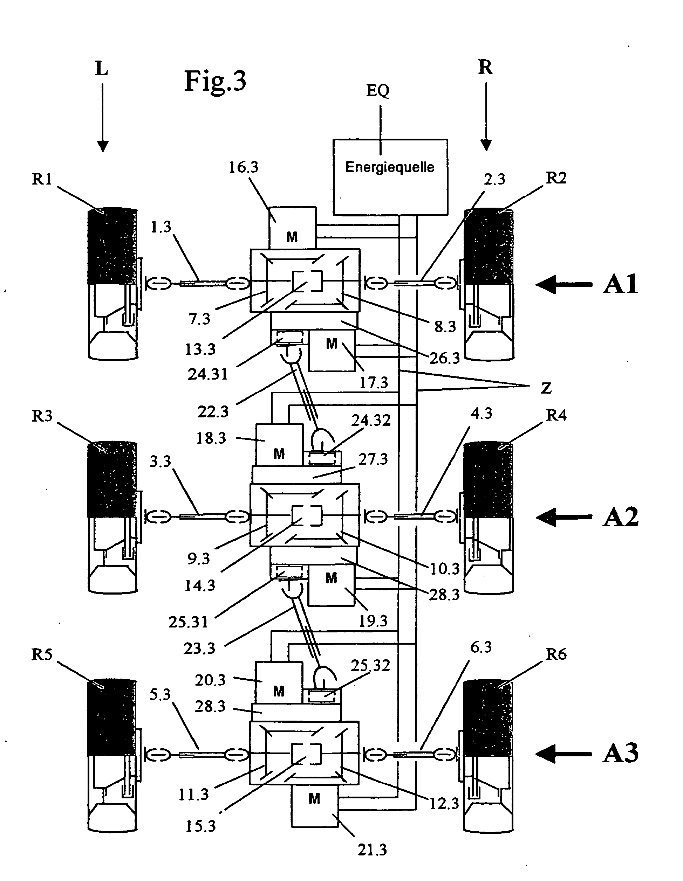

Bei der in Fig. 3 dargestellten Ausftihrungsform sind die Räder R1 und R2 der Achse A1 über in Fahrzeugquerrichtung verlaufende Gelenkwellen 1.3 bzw. 2.3 und Getriebe 7.3 bzw. 8.3 mit den Motoren 16.3 und 17.3 verbunden und über die schaltbare Quersperreinrichtung 13.3 koppelbar. Die Räder R3 und R4 der Achse A2 sind über Gelenkwellen 3.3 bzw. 4.3 und Getriebe 9.3 bzw. 10.3 mit den Motoren 18.3 und 19.3 verbunden und über die schaltbare Quersperreinrichtung 14.3 koppelbar. Die Räder R5 und R6 der Achse A3 sind über Gelenkwellen 5.3 bzw. 6.3 und Getriebe 11.3 bzw. 12.3 mit den Motoren 20.3 bzw. 21.3 verbunden und über die schaltbare Quersperreinrichtung 15.3 koppelbar.

Bei dieser Ausführungsform erfolgt die Koppelung in Längsrichtung in einer gegenüber der Ausführungsform nach Fig. 1 unterschiedlichen Weise.

Der Motor 17.3 ist über ein zusätzliches Getriebe 26.3, eine schaltbare Längssperreinrichtung 24.31, eine in Fahrzeuglängsrichtung verlaufende Gelenkwelle 22.3, eine schaltbare Längssperreinrichtung 24.32 und ein weiteres zusätzliches Getriebe 27.3 mit dem Motor 18.3 koppelbar, während der Motor 19.3 über ein zusätzliches Getriebe 28.3, eine schaltbare Längssperreinrichtung 25.31, eine in Fahrzeuglängsrichtung verlaufende Gelenkwelle 23.3, eine schaltbare Längssperreinrichtung 25.32 und ein weiteres zusätzliches Getriebe 29.3 mit dem Motor 20.3 koppelbar ist. Die Schaltungs- und Funktionsmöglichkeiten sind prinzipiell die gleichen wie bei der Ausführungsform nach Fig. 1.

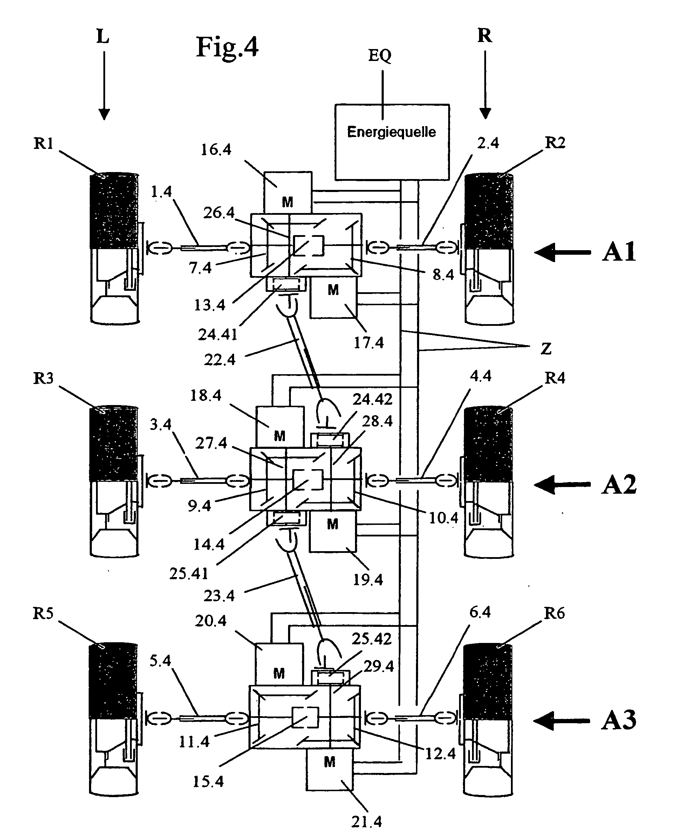

Eine weitere Möglichkeit der Auslegung des Triebstrangs zeigt Fig. 4. Hier sind die Räder R1 und R2 der Achse A1 über in Fahrzeugquerrichtung verlaufende Gelenkwellen 1.4 bzw. 2.4 und die Getriebe 7.4 bzw. 8.4 mit den Motoren 16.4 bzw. 17.4 verbunden und über die schaltbare Quersperreinrichtung 13.4 koppelbar. Die Räder R3 und R4 der Achse A2 sind über die Gelenkwellen 3.4 bzw. 4.4 und die Getriebe 9.4 bzw. 10.4 mit den Motoren 18.4 bzw. 19.4 verbunden und über die schaltbare Quersperreinrichtung 14.4 koppelbar, während die Räder R5 und R6 der Achse A3 über die Gelenkwellen 5.4 bzw. 6.4 und die Getriebe 11.4 bzw. 12.4 mit den Motoren 20.4 bzw. 21.4 verbunden und über die schaltbare Quersperreinrichtung 15.4 koppelbar sind.

Der Motor 16.4 der linken Fahrzeugseite L ist über eine durch das Getriebe 7.4 geführte Zusatzwelle 26.4, die schaltbare Längssperreinrichtung 24.41, die in Fahrzeuglängsrichtung verlaufende Gelenkwelle 22.4, die schaltbare Längssperreinrichtung 24.42 und eine durch das Getriebe 10.4 geführte Zusatzwelle 28.4 mit dem Motor 19.4 koppelbar, während der Motor 18.4 der linken Fahrzeugseite L über die durch das Getriebe 9.4 geführte Zusatzwelle 27.4, die schaltbare Längssperreinrichtung 25.41, die in Fahrzeuglängsrichtung verlaufende Gelenkwelle 23.4, die schaltbare Längssperreinrichtung 25.42 und die durch das Getriebe 12.4 geführte Zusatzwelle 29.4 mit dem Motor 21.4 der rechten Fahrzeugseite R koppelbar ist.

Die Koppelung erfolgt hier ohne ein zusätzliches Getriebe, nämlich über die oben oder unten im Getriebe liegenden Zusatzwellen. Die Funktionsweisen sind wieder prinzipiell die gleichen wie bei der Ausführungsform nach Fig. 1.

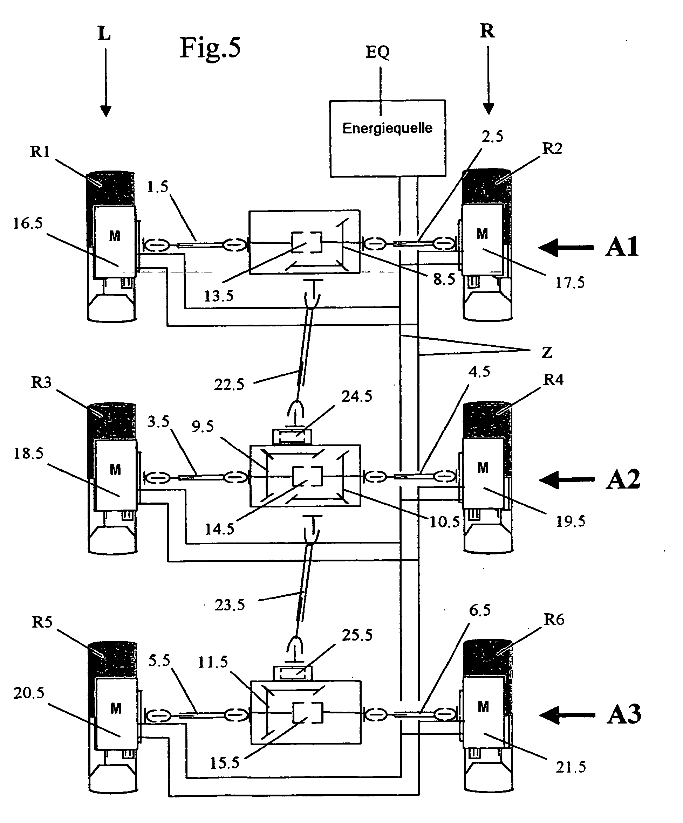

Fig. 5 zeigt einen etwas anderen Aufbau des Triebstrangs. Während bei den Ausführungsformen nach Fig. 1 bis 4 die Motoren der Antriebseinrichtung jeweils unmittelbar zu beiden Seiten der Fahrzeuglängsmitte angeordnet sind, sind bei der Ausführungsform nach Fig. 5 die den Antriebsrädern R1 bis R6 zugeordneten Motoren 16.5, 17.5, 18.5, 19.5, 20.5 und 21.5 jeweils in den Radnaben angeordnet und treiben das ihnen zugeordnete Antriebsrad direkt über ein Untersetzungsgetriebe an.

Dabei ist das Rad R1 über die in Fahrzeugquerrichtung verlaufende Gelenkwelle 1.5, die schaltbare Quersperreinrichtung 13.5 und die in Fahrzeugquerrichtung verlaufende Gelenkwelle 2.5 mit dem Rad R2 koppelbar, während das Rad R3 über die Gelenkwelle 3.5, die schaltbare Quersperreinrichtung 14.5 und die Gelenkwelle 4.5 mit dem Rad R4 koppelbar ist und das Rad R5 über die Gelenkwelle 5.5, die schaltbare Quersperreinrichtung 15.5 und die Gelenkwelle 6.5 mit dem Rad R6 koppelbar ist.
Weiterhin ist das Rad R2 bzw. der Motor 17.5 über das Getriebe 8.5, die in Längsrichtung verlaufende Gelenkwelle 22.5, die schaltbare Längssperreinrichtung 24.5 und das Getriebe 9.5 mit dem Rad R3 bzw. Motor 18.5 koppelbar. Das Rad R4 bzw. der Motor 19.5 ist über das Getriebe 10.5, die in Längsrichtung verlaufende Gelenkwelle 23.5, die schaltbare Längssperreinrichtung 25.5 und das Getriebe 11.5 mit dem Rad R5 bzw. dem Motor 20.5 koppelbar. Es bestehen die gleichen Funktions- und Schaltungsmöglichkeiten wie bei den vorhergehenden Ausführungsformen.

## Patentansprüche

1. Allradangetriebenes Kraftfahrzeug mit mindestens zwei Achsen und einer elektrischen oder hydraulischen Antriebseinrichtung, die mehrere jeweils einem der Antriebsräder zugeordnete und diese über ein Getriebe antreibende, an eine elektrische oder hydraulische Energiequelle angeschlossene Elektro- oder Hydromotoren aufweist, **dadurch gekennzeichnet, dass** die jeweils einer Radachse (A1, A2, A3) zugeordneten Motoren (16.1, 17.1, 18.1, 19.1, 20.1, 21.1) über schaltbare Quersperreinrichtungen (13.1, 14.1, 15.1) miteinander koppelbar sind und dass mindestens ein Motor (17.1, 19.1) einer Fahrzeugseite (R) über eine schaltbare Längssperreinrichtung (24.1,25.1) mit einem einer der anderen Radachsen zugeordneten Motor (18.1, 20.1) der gleichen oder der anderen Fahrzeugseite (L) koppelbar ist.

2. Kraftfahrzeug nach Anspruch 1, **dadurch gekennzeichnet, dass** jeder der zu beiden Seiten der Fahrzeuglängsmitte angeordneten Motoren (16.1, 17.1) das ihm zugeordnete Rad (R1, R2) über ein Getriebe (7.1, 8.1) und eine in Fahrzeugquerrichtung verlaufende Gelenkwelle (1.1, 2.1) antreibt, wobei die einer Radachse (A1) zugeordneten Getriebe (7.1, 8.1) zu beiden Seiten der Fahrzeuglängsmitte angeordnet und über die schaltbare Quersperreinrichtung (13.1) koppelbar sind.

3. Kraftfahrzeug nach Anspruch 2, **dadurch gekennzeichnet, dass** die jeweils einer Radachse (A1) zugeordneten Getriebe (7.1, 8.1) und die schaltbare Quersperreinrichtung (13.1) innerhalb eines gemeinsamen Gehäuses angeordnet sind, an dessen in Querrichtung verlaufenden Außenwänden die Motoren (16.1, 17.1) angesetzt sind.

4. Kraftfahrzeug nach Anspruch 2 oder 3, **dadurch gekennzeichnet, dass** mindestens ein Motor (17.1) einer Fahrzeugseite (R) über eine in Fahrzeuglängsrichtung verlaufende Gelenkwelle (22.1) und eine schaltbare Längssperreinrichtung (24.1) mit dem der nächsten Radachse (A2) und der anderen Fahrzeugseite (L) zugeordneten Motor (18.1) koppelbar ist.

5. Kraftfahrzeug nach Anspruch 4, **dadurch gekennzeichnet, dass** die Koppelung des Motors (17.3) einer Fahrzeugseite (R) mit dem Motor (18.3) der nächsten Radachse (A2) der anderen Fahrzeugseite (L) über mindestens ein zusätzliches Getriebe (26.3, 27.3) und mindestens eine schaltbare Längssperreinrichtung (24.31, 24.32) erfolgt.

6. Kraftfahrzeug nach Anspruch 3 und 5, **dadurch gekennzeichnet, dass** die zusätzlichen Getriebe (26.3, 27.3, 28.3, 29.3) an den Außenwänden des gemeinsamen Gehäuses angeordnet sind und die Motoren (17.3, 18.3, 19.3, 20.3) an die Außenseiten der zusätzlichen Getriebe angesetzt sind.

7. Kraftfahrzeug nach Anspruch 4, **dadurch gekennzeichnet, dass** die Koppelung des Motors (16.4) einer Fahrzeugseite (L) mit dem Motor (19.4) der nächsten Radachse (A2) der anderen Fahrzeugseite (R) über jeweils durch das dem Motor zugeordnete Getriebe (7.4, 10.4) geführte zusätzliche Wellen (26.4, 28.4) erfolgt.

8. Kraftfahrzeug nach Anspruch 2 oder 3, **dadurch gekennzeichnet, dass** mindestens ein Motor (16.2, 17.2) einer Fahrzeugseite (L, R) über eine in Fahrzeuglängsrichtung verlaufende Gelenkwelle (22.21, 22.22) und eine schaltbare Längssperreinrichtung (24.21, 24.22) mit dem der nächsten Radachse (A2) der gleichen Fahrzeugseite (L, R) zugeordneten Motor (18.2, 19.2) koppelbar ist.

9. Kraftfahrzeug nach Anspruch 8, **dadurch gekennzeichnet, dass** jeweils die einer Radachse (A1) zugeordneten Motoren (16.2, 17.2) mit den der nächsten Radachse (A2) zugeordneten Motoren (18.2, 19.2) auf beiden Fahrzeugseiten (L, R) koppelbar sind.

10. Kraftfahrzeug nach den Ansprüchen 4 oder 8, **dadurch gekennzeichnet, dass** mindestens einer der Motoren (17.1, 17.2), die mit einem Motor (18.1, 19.2) der nächsten Radachse (A2) koppelbar sind, eine durchgehende Abtriebswelle besitzt, deren eines Ende mit dem Getriebe (8.1, 8.2) dieses Motors und deren anderes Ende über die in Fahrzeuglängsrichtung verlaufende Gelenkwelle (22.1, 22.22) und die schaltbare Längssperreinrichtung (24.1, 24.22) mit der Abtriebswelle des Motors (18.1, 19.2) der nächsten (A2) oder der vorhergehenden Radachse verbunden ist.

11. Kraftfahrzeug nach den Ansprüchen 8 und 10, **dadurch gekennzeichnet, dass** bei mindestens einem der Motoren (16.4), die mit einem Motor (19.4) der nächsten Radachse (A2) koppelbar sind, die Verbindung der Abtriebswelle mit der zum Motor (19.4) der nächsten (A2) oder der vorhergehenden Radachse führenden, in Fahrzeuglängsrichtung verlaufenden Gelenkwelle (22.4), über eine durch das Getriebe (7.4) dieses Motors (16.4) geführte zusätzliche Welle (26.4) erfolgt.

12. Kraftfahrzeug nach Anspruch 1, **dadurch gekennzeichnet, dass** die den Antriebsrädern (R1-R6) zugeordneten Motoren (16.5-21.5) jeweils in den Radnaben angeordnet sind und das ihnen zugeordnete Antriebsrad direkt oder über ein Getriebe antreiben, und mindestens bei einer Radachse (A1) die zwei Motoren (16.5, 17.5) jeweils über eine in Fahrzeugquerrichtung verlaufende Gelenkwelle (1.5, 2.5) mit einer schaltbaren Quersperreinrichtung (13.5) verbunden sind, über welche sie koppelbar sind.

13. Kraftfahrzeug nach Anspruch 12, **dadurch gekennzeichnet, dass** mindestens einer der Motoren (17.5) einer Fahrzeugseite (R) über die zur Quersperreinrichtung (13.5) führende in Fahrzeugquerrichtung verlaufende Gelenkwelle (2.5) mit einem Zwischengetriebe (8.5) verbunden ist, das über mindestens eine schaltbare Längssperreinrichtung (24.5) und eine in Fahrzeuglängsrichtung verlaufende Gelenkwelle (22.5) sowie ein weiteres Zwischengetriebe (9.5) mit der zu einem Motor (18.5) der nächsten Achse (A2) und der anderen Fahrzeugseite (L) führenden, in Fahrzeugquerrichtung verlaufenden Gelenkwelle (3.5) koppelbar ist.

14. Kraftfahrzeug nach Anspruch 13, **dadurch gekennzeichnet, dass** die Quersperreinrichtungen (13.5, 14.5, 15.5) und/oder die Zwischengetriebe (8.5, 9.5, 10.5, 11.5) auf oder unmittelbar neben der Fahrzeuglängsmitte angeordnet sind.

15. Kraftfahrzeug nach einem der Ansprüche 1 bis 14, **dadurch gekennzeichnet, dass** die schaltbaren Quersperreinrichtungen (13.1, 14.1, 15.1) und/ oder die schaltbaren Längssperreinrichtungen (24.1, 25.1) als formschlüssig arbeitende Kupplungen ausgebildet sind.

16. Kraftfahrzeug nach einem der Ansprüche 1 bis 14, **dadurch gekennzeichnet, dass** die schaltbaren Quersperreinrichtungen (13.1, 14.1, 15.1) und/ oder die schaltbaren Längssperreinrichtungen (24.1, 25.1) als kraftschlüssig arbeitende Kupplungen ausgebildet sind.

## Claims

1. All-wheel drive motor vehicle, comprising at least two axles and an electric or hydraulic drive unit which comprises a plurality of electric or hydraulic motors, connected to an electrical or hydraulic energy source, each motor being associated with one of the drive wheels and driving these wheels via a transmission, **characterised in that** the motors (16.1, 17.1, 18.1, 19.1, 20.1, 21.1) associated with one wheel axle (A1, A2, A3) in each case can be coupled to each other via shiftable transverse locking devices (13.1, 14.1, 15.1), and **in that** at least one motor (17.1, 19.1) on a side (R) of the vehicle can be coupled via a shiftable longitudinal locking device (24.1, 25.1) to a motor (18.1, 20.1) associated with one of the other wheel axles on the same or the other side (L) of the vehicle.

2. Motor vehicle according to claim 1, **characterised in that** each of the motors (16.1, 17.1) arranged on either side of the longitudinal axis of the vehicle drives the wheel (R1, R2) associated therewith via a transmission (7.1, 8.1) and a universal joint shaft (1.1, 2.1) extending in the transverse direction of the vehicle, wherein the transmissions (7.1, 8.1) associated with a wheel axle (A1) are arranged on either side of the longitudinal axis of the vehicle and can be coupled via the shiftable transverse locking device (13.1).

3. Motor vehicle according to claim 2, **characterised in that** the transmission (7.1, 8.1) associated with one wheel axle (A1) in each case and the shiftable transverse locking device (13.1) are arranged inside a common housing, on the outer walls of which, extending in the transverse direction, the motors (16.1, 17.1) are disposed.

4. Motor vehicle according to claim 2 or 3, **characterised in that** at least one motor (17.1) on a side (R) of the vehicle can be coupled via a universal joint shaft (22.1), extending in the longitudinal direction of the vehicle, and a shiftable longitudinal locking device (24.1) to the motor (18.1) associated with the next wheel axle (A2) and the other side (L) of the vehicle.

5. Motor vehicle according to claim 4, **characterised in that** the motor (17.3) on one side (R) of the vehicle is coupled to the motor (18.3) of the next wheel axle (A2) on the other side (L) of the vehicle via at least one additional transmission (26.3, 27.3) and at least one shiftable longitudinal locking device (24.31, 24.32).

6. Motor vehicle according to claim 3 and 5, **characterised in that** the additional transmissions (26.3, 27.3, 28.3, 29.3) are arranged on the outer walls of the common housing and the motors (17.3, 18.3, 19.3, 20.3) are disposed on the outer sides of the additional transmissions.

7. Motor vehicle according to claim 4, **characterised in that** the motor (16.4) on one side (L) of the vehicle is coupled to the motor (19.4) of the next wheel axle (A2) on the other side (R) of the vehicle via additional shafts (26.4, 28.4) that are each guided through the transmission (7.4, 10.4) associated with the motor.

8. Motor vehicle according to claim 2 or 3, **characterised in that** at least one motor (16.2, 17.2) on one side (L, R) of the vehicle can be coupled via a universal joint shaft (22.21, 22.22), extending in the longitudinal direction of the vehicle, and a shiftable longitudinal locking device (24.21, 24.22) to the motor (18.2, 19.2) associated with the next wheel axle (A2) on the same side (L, R) of the vehicle.

9. Motor vehicle according to claim 8, **characterised in that** on both sides of the vehicle (L, R) the motors (16.2, 17.2) associated with one wheel axle (A1) in each case can be coupled to the motors (18.2, 19.2) associated with the next wheel axle (A2).

10. Motor vehicle according to claims 4 or 8, **characterised in that** at least one of the motors (17.1, 17.2), which can be coupled to a motor (18.1, 19.2) of the next wheel axle (A2), has a continuous driven shaft, of which one end is connected to the transmission (8.1, 8.2) of this motor and of which the other end is connected via the universal joint shaft (22.1, 22.22), extending in the longitudinal direction of the vehicle, and the shiftable longitudinal locking device (24.1, 24.22) to the driven shaft of the motor (18.1, 19.2) of the next (A2) or the preceding wheel axle.

11. Motor vehicle according to claims 8 and 10, **characterised in that** with at least one of the motors (16.4), which can be coupled to a motor (19.4) of the next wheel axle (A2), the driven shaft is connected to the universal joint shaft (22.4), extending in the longitudinal direction of the vehicle and leading to the motor (19.4) of the next (A2) or preceding wheel axle, via an additional shaft (26.4) guided through the transmission (7.4) of this motor (16.4).

12. Motor vehicle according to claim 1, **characterised in that** the motors (16.5 to 21.5) associated with the drive wheels (R1 to R6) are each arranged in the wheel hubs and drive the drive wheel associated therewith directly or via a transmission, and with at least one wheel axle (A1) the two motors (16.5, 17.5) are each connected via a universal joint shaft (1.5, 2.5), extending in the transverse direction of the vehicle, to a shiftable transverse locking device (13.5) via which they can be coupled.

13. Motor vehicle according to claim 12, **characterised in that** at least one of the motors (17.5) on one side of the vehicle (R) is connected via the universal joint shaft (2.5), extending in the transverse direction of the vehicle and leading to the transverse locking device (13.5), to an intermediate transmission (8.5) which can be coupled via at least one shiftable longitudinal locking device (24.5) and a universal joint shaft (22.5), extending in the longitudinal direction of the vehicle, and a further intermediate transmission (9.5) to the universal joint shaft (3.5), extending in the transverse direction of the vehicle and leading to a motor (18.5) of the next axle (A2) and on the other side of the vehicle (L).

14. Motor vehicle according to claim 13, **characterised in that** the transverse locking devices (13.5, 14.5, 15.5) and/or the intermediate transmission (8.5, 9.5, 10.5, 11.5) are arranged on or directly adjacent to the longitudinal axis of the vehicle.

15. Motor vehicle according to any one of claims 1 to 14, **characterised in that** the shiftable transverse locking devices (13.1, 14.1, 15.1) and/or the shiftable longitudinal locking devices (24.1, 25.1) are constructed as couplings that operate with interlocking fit.

16. Motor vehicle according to any one of claims 1 to 14, **characterised in that** the shiftable transverse locking devices (13.1, 14.1, 15.1) and/or the shiftable longitudinal locking devices (24.1, 25.1) are constructed as couplings that operate with non-positive fit.

## Revendications

1. Véhicule automobile à quatre roues motrices comprenant au moins deux essieux et un dispositif d'entraînement électrique ou hydraulique, qui présente plusieurs moteurs électriques ou hydrauliques raccordés à une source énergétique électrique ou hydraulique, associés respectivement à une des roues motrices et entraînant celles-ci par l'intermédiaire d'un engrenage, **caractérisé en ce que** les moteurs (16.1, 17.1, 18.1, 19.1, 20.1, 21.1) associés respectivement à un essieu de roue (A1, A2, A3) peuvent être couplés les uns avec les autres par l'intermédiaire de dispositifs de blocage transversal commutables (13.1, 14.1, 15.1) et **en ce qu'**au moins un moteur (17.1, 19.1) d'un côté du véhicule (R) peut être couplé à un moteur (18.1, 20.1) du même côté ou de l'autre côté du véhicule (L), associé à l'un des autres essieux de roue par l'intermédiaire d'un dispositif de blocage longitudinal commutable (24.1, 25.1).

2. Véhicule automobile selon la revendication 1, **caractérisé en ce que** chacun des moteurs (16.1, 17.1) associés aux deux côtés de l'axe longitudinal du véhicule entraîne la roue (R1, R2) qui lui est associée par l'intermédiaire d'un engrenage (7.1, 8.1) ainsi que d'un arbre de transmission (1.1, 2.1) s'étendant dans la direction transversale du véhicule, les engrenages (7.1, 8.1) associés à un essieu de roue (A1) étant disposés de chaque côté de l'axe longitudinal du véhicule et pouvant être couplés par l'intermédiaire du dispositif de blocage transversal commutable (13.1).

3. Véhicule automobile selon la revendication 2, **caractérisé en ce que** les engrenages-(7.1, 8.1) respectivement associés à un essieu de roue (A1) et le dispositif de blocage transversal commutable (13.1) sont disposés à l'intérieur d'un carter commun, au niveau des parois extérieures duquel les moteurs (16.1, 17.1) sont fixés, ces parois s'étendant dans la direction transversale.

4. Véhicule automobile selon la revendication 2 ou 3, **caractérisé en ce que** au moins un moteur (17.1) d'un côté du véhicule (R) peut être couplé, par l'intermédiaire d'un arbre de transmission (22.1) s'étendant dans la direction longitudinale du véhicule et d'un dispositif de blocage longitudinal commutable (24.1), avec le moteur (18.1) associé à l'essieu de roue suivant (A2) et à l'autre côté du véhicule (L).

5. Véhicule automobile selon la revendication 4, **caractérisé en ce que** le couplage du moteur (17.3) d'un côté du véhicule (R) avec le moteur (18.3) de l'essieu de roue suivant (A2) de l'autre côté du véhicule (L) est effectué par l'intermédiaire d'au moins un engrenage supplémentaire (26.3, 27.3) et d'au moins un dispositif de blocage longitudinal commutable (24.31, 24.32).

6. Véhicule automobile selon la revendication 3 et 5, **caractérisé en ce que** les engrenages supplémentaires (26.3, 27.3, 28.3, 29.3) sont disposés sur les parois extérieures du carter commun, et **en ce que** les moteurs (17.3, 18.3, 19.3, 20.3) sont fixés sur les côtés extérieurs des engrenages supplémentaires.

7. Véhicule automobile selon la revendication 4, **caractérisé en ce que** le couplage du moteur (16.4) d'un côté du véhicule (L) avec le moteur (19.4) de l'essieu de roue suivant (A2) de l'autre côté du véhicule (R) est effectué par l'intermédiaire d'arbres supplémentaires (26.4, 28.4) entraînés respectivement par l'engrenage (7.4, 10.4) associé au moteur.

8. Véhicule automobile selon la revendication 2 ou 3, **caractérisé en ce que** au moins un moteur (16.2, 17.2) d'un côté du véhicule (L, R) peut être couplé, par l'intermédiaire d'un arbre de transmission (22.21, 22.22) s'étendant dans la direction longitudinale du véhicule et d'un dispositif de blocage longitudinal commutable (24.21, 24.22), avec le moteur (18.2, 19.2) associé à l'essieu de roue suivant (A2) du même côté du véhicule (L, R).

9. Véhicule automobile selon la revendication 8, **caractérisé en ce que** respectivement les moteurs (16.2, 17.2) associés à un essieu de roue (A1) peuvent être couplés aux moteurs (18.2, 19.2) associés à l'essieu de roue suivant (A2) de chaque côté du véhicule (L, R).

10. Véhicule automobile selon les revendications 4 ou 8, **caractérisé en ce que** au moins un des moteurs (17.1, 17.2) qui peuvent être couplés avec un moteur (18.1, 19.2) de l'essieu de roue suivant (A2), possède un arbre de sortie traversant, dont une extrémité est reliée à l'engrenage (8.1, 8.2) de ce moteur et dont l'autre extrémité est reliée, par l'intermédiaire de l'arbre de transmission (22.1, 22.22) s'étendant dans la direction longitudinale du véhicule et du dispositif de blocage longitudinal commutable (24.1, 24.22), à l'arbre de sortie du moteur (18.1, 19.2) de l'essieu de roue suivant (A2) ou précédent.

11. Véhicule automobile selon les revendications 8 et 10, **caractérisé en ce que**, avec au moins un des moteurs (16.4), qui peuvent être couplés à un moteur (19.4) de l'essieu de roue suivant (A2), la liaison de l'arbre de sortie avec l'arbre de transmission (22.4) s'étendant dans la direction longitudinale du véhicule, menant au moteur (19.4) de l'essieu de roue suivant (A2) ou du précédent, est effectuée par un arbre (26.4) supplémentaire, entraîné par l'engrenage (7.4) de ce moteur (16.4).

12. Véhicule automobile selon la revendication 1, **caractérisé en ce que** les moteurs (16.5-21.5) associés aux roues motrices (R1-R6) sont respectivement disposés dans les moyeux de roue et entraînent la roue motrice qui leur est associée directement ou par l'intermédiaire d'un engrenage, et **en ce que** au moins pour un essieu de roue (A1), les deux moteurs (16.5, 17.5) sont reliés respectivement, par l'intermédiaire d'un arbre de transmission (1.5, 2.5) s'étendant dans la direction transversale du véhicule, avec un dispositif de blocage transversal commutable (13.5), par l'intermédiaire duquel ils peuvent être couplés.

13. Véhicule automobile selon la revendication 12, **caractérisé en ce que** au moins un des moteurs (17.5) d'un côté du véhicule (R) est relié, par l'intermédiaire de l'arbre de transmission (2.5) s'étendant dans la direction transversale du véhicule et menant au dispositif de blocage transversal (13.5), à un engrenage intermédiaire (8.5), qui peut être couplé, par l'intermédiaire d'au moins un dispositif de blocage longitudinal commutable (24.5) et d'un arbre de transmission (22.5) s'étendant dans la direction longitudinale du véhicule ainsi que d'un engrenage intermédiaire supplémentaire (9.5), à l'arbre de transmission (3.5) s'étendant dans la direction transversale du véhicule et menant à un moteur (18.5) de l'essieu suivant (A2) et à l'autre côté du véhicule (L).

14. Véhicule automobile selon la revendication 13, **caractérisé en ce que** les dispositifs de blocage transversal (13.5, 14.5, 15.5) et/ou l'engrenage intermédiaire (8.5, 9.5, 10.5, 11.5) sont disposés sur ou directement à côté de l'axe longitudinal du véhicule.

15. Véhicule automobile selon l'une quelconque des revendications 1 à 14, **caractérisé en ce que** les dispositifs de blocage transversal commutables (13.1, 14.1, 15.1) et/ou les dispositifs de blocage longitudinal commutables (24.1, 25.1) sont conçus comme des couplages travaillant par crabotage.

16. Véhicule automobile selon l'une quelconque des revendications 1 à 14, **caractérisé en ce que** les dispositifs de blocage transversal commutables (13.1, 14.1, 15.1) et/ou les dispositifs de blocage longitudinal commutables (24.1, 25.1) sont conçus comme des couplages travaillant par friction.
